# EUROPÄISCHE PATENTSCHRIFT

(11) **EP 1 499 692 B1**
(45) Veröffentlichungstag und Bekanntmachung des Hinweises auf die Patenterteilung: **10.08.2011**
(21) Anmeldenummer: 03720530.9
(22) Anmeldetag: 25.04.2003
(51) Int. Cl.: C09D 183/04, C09D 183/02, C08L 83/04, C08L 83/02, C08K 3/00

(54) **SUBSTRATE MIT BIOFILM-HEMMENDER BESCHICHTUNG**
SUBSTRATES HAVING A BIOFILM-INHIBITING COATING
SUBSTRATS DOTES D'UN REVETEMENT EMPECHANT LA FORMATION D'UN BIOFILM

(30) Priorität: 29.04.2002 DE 10219127
(43) Veröffentlichungstag der Anmeldung: 26.01.2005
(73) Patentinhaber: Leibniz-Institut für Neue Materialien gemeinnützige GmbH, 66123 Saarbrücken (DE)
(72) Erfinder: BECKER-WILLINGER, Carsten, 66130 Saarbrücken (DE); SCHMIDT, Helmut, 66130 Saarbrücken-Güdingen (DE)
(74) Vertreter: Köllner, Malte
(86) Internationale Anmeldenummer: PCT/EP2003/004341
(87) Internationale Veröffentlichungsnummer: WO 2003/093383

(56) Entgegenhaltungen:
- EP-A- 1 054 047
- DE-A- 19 935 230
- US-A1- 2002 013 385

## Beschreibung

Die vorliegende Erfindung betrifft Substrate mit einer Biofilm-hemmenden Beschichtung, Verfahren zu deren Herstellung und deren Verwendung.

Gegenstände sind den in der Umgebung praktisch immer vorhandenen Mikroorganismen, wie Bakterien, Pilzen, Hefen, Algen und Flechten, ausgesetzt. Der Befall oder Bewuchs von Gegenständen mit diesen Mikroorganismen verursacht enorme wirtschaftliche Schäden, da ein solcher Biofilm z.B. durch Abscheidung von Enzymen oder mechanische Beanspruchung materialzerstörende Eigenschaften aufweist. Außerdem besteht die Gefahr der Kontamination anderer Gegenstände oder von Medien, die mit einem Gegenstand, der mit einem Biofilm versehen ist, in Kontakt kommen oder sich auch nur in dessen Nähe befinden. Daher sind alle Anwendungen, die eine hohe Reinheit erfordern, gegenüber solchen Biofilmen besonders empfindlich. Das Gesundheitsrisiko durch Krankheitserreger im Biofilm erfordert besondere Vorsichtsmaßregeln.

Aufgrund der wirtschaftlichen Bedeutung gibt es viele Maßnahmen, um die Bildung eines solchen Biofilms auf Gegenständen und allgemein. auf Substraten möglichst zu vermeiden. Insbesondere werden hierfür mikrobizide Substanzen eingesetzt, mit denen man die Substrate von Zeit zu Zeit besprüht oder die man in Beschichtungen auf dem Substrat verwendet.

Die Schrift EP 1 054 047 A2 beschreibt ein Beschichtungssystem mit Silanen, welche mit fluorierten Polymeren modifiziert sind.

DE 199 35 230 A1 beschreibt ein biofilmhemmendes Mittel aus einem Metalloxid-Xerogel, das in homogener Verteilung Edelmetallverbindungen, sowie eine reduzierende Gruppe enthält.

US 2002/0013385 A1 beschreibt eine schmutzabweisende Beschichtung aus Silikonen und Siloxanen, welche ein interpenetrierendes Netzwerk aufweist.

Die vorliegende Erfindung stellt eine Biofilm-hemmende Beschichtung bereit, die äußerst effektiv ist. Gegenstand der Erfindung ist ein Substrat mit einer Beschichtung aus einem mit organischen Gruppen modifizierten anorganischen Kondensat aus einer oder mehreren hydrolysierbaren anorganischen Verbindungen mit mindestens einem nicht-hydrolysierbaren Substituenten, wobei die hydrolysierbaren anorganischen Verbindungen ein oder mehrere Fluorsilane der allgemeinen Formel (II)

Rf(R)_{b}SiX_{(3-b)} (II)

umfassen, worin die Reste R gleich oder verschieden sind und nicht-hydrolysierbare Gruppen darstellen, die Reste X gleich oder verschieden sind und hydrolysierbare Gruppen oder Hydroxylgruppen bedeuten, Rf eine nicht-hydrolysierbare Gruppe ist, die 1 bis 30 Fluoratome an aliphatische Kohlenstoffatome gebunden aufweist, und b 0,1 oder 2 ist, und Kupfer- oder Silberkolloide in der Beschichtung enthalten sind.

Bei Beschichtung der Oberfläche eines Substrats mit einem derartigen Lack wird die Bildung des Biofilms auf dem Substrat bei Gebrauch deutlich gehemmt oder gänzlich vermieden. Die Biofilmunterdrückung ist dabei überraschenderweise wesentlich effektiver als bei herkömmlichen Beschichtungen, die z.B. mikrobizide Silberverbindungen enthalten. Offenbar wird durch die Kombination von Kondensaten mit fluorhaltigen organischen Gruppen und der Anwesenheit von Kupfer- oder Silberkolloiden in der Beschichtung eine unerwartete Synergie im Hinblick auf den Biofilm-hemmenden Effekt erreicht.

Bei dem Substrat kann es sich um jedes übliche Material handeln. Beispiele sind Metall, Gestein, Holz, Papier, Textilien, Leder, Keramik, Glas, Email, Gummi oder Kunststoff. Metall schließt Metalllegierungen ein und Beispiele sind Stahl, einschließlich Edelstahl, Chrom, Kupfer, Titan, Zinn, Zink, Messing und Aluminium. Beispiele für Kunststoff sind Polymethylmethacrylat (PMMA), Polyethylen, Polypropylen, Polyacrylate wie Polymethylacrylat, Polyvinylbutyral oder Polycarbonat. Beispiele für Glas sind Floatglas, Borosilicatglas, Bleikristall oder Kieselglas. Das Papier und die Textilien können aus pflanzlichen, tierischen oder synthetisch hergestellten Fasern sein. Gestein umfasst Naturstein, wie Marmor, Granit oder Sandstein, und künstlichen Stein, wie Beton und Mörtel.

Die Beschichtung eignet sich im Prinzip für alle Substrate bzw. Gegenstände. Der Gegenstand kann aus einem Material oder aus mehreren Teilen aus unterschiedlichen Materialien bestehen. Der Gegenstand kann zumindest zum Teil eine zu beschichtende Oberflächenschicht aufweisen. Die Biofilm-hemmende Beschichtung kann auf die gesamte Oberfläche des Substrats aufgebracht werden. Es können je nach Bedarf auch nur Teile des Substrats mit der Beschichtung versehen werden. Dies kann sich z.B. daraus ergeben, dass diese Teile den Mikroorganismen besonders stark ausgesetzt sind (Schiffsrumpf) oder für diese Teile ein Biofilm besonders unerwünscht ist (Innenwand von Lebensmittelbehältern).

Das Substrat kann auf die übliche Weise vorbehandelt werden, z. B. um eine Reinigung, eine Entfettung oder eine bessere Haftung mit der Beschichtung zu erreichen. Das Substrat kann z.B. durch Metallisierung, Emaillierung oder Lackierung mit einer Oberflächenschicht versehen sein. Häufig ist es zweckmäßig, das Substrat mit einer Grundierung aus einem herkömmlichen Lack zu versehen.

Selbstverständlich kann, wenn nur ein Teil des Substrats beschichtet werden soll, der zu beschichtende Teil des Substrats zunächst separat beschichtet werden und dann zum fertigen Gegenstand zusammengefügt werden. Die Beschichtung kann durch Auftragen einer nachstehend erläuterten Beschichtungszusammensetzung auf das Substrat und Behandlung mit Wärme und/oder Strahlung erhalten werden. Bevorzugt wird eine lichthärtende Beschichtungszusammensetzung eingesetzt.

Die eingesetzte Beschichtungszusammensetzung (Lack) umfasst ein Hydrolysat oder Vorkondensat auf Basis von einer oder mehreren anorganischen hydrolysierbaren Verbindungen mit mindestens einem nicht-hydrolysierbaren Substituenten. Der nicht-hydrolysierbare Substituent ist insbesondere ein organischer Substituent (kohlenstoffhaltig), wobei zumindest ein Teil der organischen Gruppen des Kondensats Fluoratome aufweist. Die Beschichtungszusammensetzung umfasst mindestens ein hydrolysierbares Silan mit mindestens einem nicht-hydrolysierbaren Substituenten als hydrolysierbare Verbindung, wobei die hydrolysierbaren anorganischen Verbindungen ein oder mehrere Fluorsilane der allgemeinen Formel (II)

Rf(R)_{b}SiX_{(3-b)} (II)

umfassen, worin die Reste R gleich oder verschieden sind und nicht-hydrolysierbare Gruppen darstellen, die Reste X gleich oder verschieden sind und hydrolysierbare Gruppen oder Hydroxylgruppen bedeuten, Rf eine nicht-hydrolysierbare Gruppe ist, die 1 bis 30 Fluoratome an aliphatische Kohlenstoffatome gebunden aufweist, und b 0,1 oder 2 ist.

Das Hydrolysat oder Vorkondensat wird bevorzugt durch 'teilweise Hydrolyse oder Kondensation von einem oder mehreren Silanen der allgemeinen Formel (I)

RₐSiX₍₄₋ₐ₎ (I)

erhalten, worin die Reste R gleich oder verschieden sind und nicht-hydrolysierbare Gruppen darstellen, die Reste X gleich oder verschieden sind und hydrolysierbare Gruppen oder Hydroxylgruppen bedeuten und a den Wert 1, 2 oder 3 hat, wobei ein Wert von 1 bevorzugt ist.

Bei den Organosilanen der Formel (I) sind die hydrolysierbaren Gruppen X beispielsweise Wasserstoff oder Halogen (F, Cl, Br oder I, insbesondere Cl und Br),

Alkoxy (vorzugsweise C₁₋₆-Alkoxy, insbesondere C₁₋₄-Alkoxy, wie z.B. Methoxy, Ethoxy, n-Propoxy, i-Propoxy, n-Butoxy, i-Butoxy, sek.-Butoxy und tert.-Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino, wobei die Alkylgruppen vorzugsweise 1 bis 12, insbesondere 1 bis 6 Kohlenstoffatome, aufweisen. Bevorzugte hydrolysierbare Reste sind Halogen, Alkoxygruppen und Acyloxygruppen. Besonders bevorzugte hydrolysierbare Reste sind Alkoxygruppen, insbesondere Methoxy und Ethoxy.

R ist ein nicht-hydrolysierbarer organischer Rest, der gegebenenfalls eine funktionelle Gruppe tragen kann. Beispiele für R sind Alkyl (z.B. C₁₋₂₀-Alkyl, vorzugsweise. C₁₋₆-Alkyl, wie Methyl, Ethyl, n-Propyl, Isopropyl, n-Butyl, s-Butyl und tert.-Butyl, Pentyl, Hexyl oder Cyclohexyl), Alkenyl (z.B. C₂₋₂₀-Alkenyl, vorzugsweise C₂₋₆-Alkenyl, wie z.B. Vinyl, 1-Propenyl, 2-Propenyl und Butenyl), Alkinyl (z.B. C₂₋₂₀-Alkinyl, vorzugsweise C₂₋₆-Alkinyl, wie z.B. Acetylenyl und Propargyl) und Aryl (vorzugsweise C₆₋₁₀-Aryl, wie z.B. Phenyl und Naphthyl).

Spezielle Beispiele für funktionelle Gruppen des Restes R sind, neben den bereits vorstehend genannten Gruppen mit ungesättigten C-C-Bindungen, die Epoxy-, Hydroxy-, Ether-, Amino-, Monoalkylamino-, Dialkylamino-, z.B. mit den vorstehend definierten C₁₋₆-Alkylgruppen, Amid-, Carboxy-, Mercapto-, Thioether-, Vinyl-, Isocyanat-, Acryloxy-, Methacryloxy-, Säureanhydrid-, Säurehalogenid-, Cyano-, Halogen-, Aldehyd-, Alkylcarbonyl-, Sulfonsäure- und Phosphorsäuregruppe. Diese funktionellen. Gruppen sind über zweiwertige Brückengruppen, z.B. Alkylen-, Alkenylen- oder Arylen-Brückengruppen, die durch Sauerstoff- oder Schwefelatome oder -NH-Gruppen unterbrochen sein können, an das Siliciumatom gebunden. Die genannten Brückengruppen leiten sich z.B. von den oben genannten Alkyl-, Alkenyl- oder Arylresten ab. Die Reste R enthalten vorzugsweise 1 bis 18, insbesondere 1 bis 8 Kohlenstoffatome. Die genannten Reste R und X können gegebenenfalls einen oder mehrere übliche Substituenten; wie z.B. Halogen oder Alkoxy, aufweisen.

In einer bevorzugten Ausführungsform enthält mindestens eines der eingesetzten hydrolysierbaren Silane mit mindestens einem nicht-hydrolysierbaren Substituenten an dem nicht-hydrolysierbaren Substituenten eine der vorstehend genannten funktionellen Gruppen. Über diese funktionelle Gruppe kann dann eine Vernetzung erfolgen, z.B. durch Reaktion der funktionellen Gruppen an den Silanen untereinander, wobei unterschiedliche oder gleiche funktionelle Gruppen miteinander reagieren können, oder mit funktionellen Gruppen an den nachstehend beschriebenen organischen Verbindungen, die ebenfalls in der Beschichtungszusammensetzung enthalten sein können. Die Vernetzung über die funktionellen Gruppen führt zu einer Härtung über die im Kondensat befindlichen organischen Gruppen (organische Vernetzung).

Bevorzugte funktionelle Gruppen sind Kohlenstoff-Kohlenstoff-Doppelbindungen sowie die Epoxid-, Säureanhydrid- und Aminogruppe, wobei der Einsatz von Kohlenstoff-Kohlenstoff-Doppelbindungen als funktionelle Gruppe besonders bevorzugt ist.

Bei den eingesetzten Verbindungen mit Kohlenstoff-Kohlenstoff-Doppelbindungen als funktioneller Gruppe handelt es sich insbesondere um Silane der allgemeinen Formel (I), worin der Rest R eine reaktive polymerisierbare Doppelbindung aufweist Bevorzugt handelt es sich um ein Silan der allgemeinen Formel (I), worin X und a wie vorstehend definiert sind (X ist bevorzugt Methoxy oder Ethoxy, a ist bevorzugt 1) und R ein nicht-hydrolysierbarer Rest, z. B. ein aliphatischer, cycloaliphatischer oder aromatischer Rest, insbesondere Alkylen, z. B. C₁-C₆-Alkylen, wie Methylen, Ethylen, Propylen und Butylen, mit einer Vinyl-, (Meth)acryl- oder (Meth)acryloxygruppe ist. Der Rest R ist bevorzugt ein (Meth)acryloxy-(C₁₋₆)-alkylen-Rest wie z.B. (Meth)acryloxypropyl. Konkrete Beispiele sind Vinyltriethoxysilan, Vinyltrimethoxysilan, Methacryloxypropyltrimethoxysilan (MPTS), Methacryloxypropyltriethoxysilan, Acryloxypropyltrimethoxysilan und Acryloxypropyltriethoxysilan.

Beispiele für Silane mit einer Epoxidgruppe sind Epoxysilane der obigen allgemeinen Formel (I), worin a einen Wert von 1 hat, X vorzugsweise C₁₋₄-Alkoxy, besonders bevorzugt Methoxy und Ethoxy, ist und R ein nicht-hydrolysierbarer Rest mit mindestens einer Epoxidgruppe ist, z. B. ein aliphatischer, cycloaliphatischer oder aromatischer Rest, insbesondere Alkylen, z. B. C₁-C₆-Alkylen, wie Methylen, Ethylen, Propylen und Butylen, mit mindestens einer Epoxidgruppe. Der Rest R ist bevorzugt ein Glycidyloxy-(C₁₋₆)-alkylen-Rest wie z.B. γ-Glycidyloxypropyl. Beispiele sind γ-Glycidyloxypropyltrimethoxysilan (GPTS) und γ-Glycidyloxypropyltriethoxysilan (GPTES). Beispiele für Aminosilane sind solche der obigen allgemeinen Formel (I), worin a einen Wert von 1 aufweist, X vorzugsweise C₁₋₄-Alkoxy, besonders bevorzugt Methoxy und Ethoxy, ist und R ein nicht-hydrolysierbarer Rest mit mindestens einer Aminogruppe ist, z. B. ein aliphatischer, cycloaliphatischer oder aromatischer Rest, insbesondere Alkylen, z. B. C₁-C₆-Alkylen, wie Methylen, Ethylen, Propylen und Butylen, mit mindestens einer primären, sekundären oder tertiären Aminogruppe. Beispielsweise ist R eine R¹₂N-(Alkylen-NR¹)ₓ-alkylen-Rest, worin x 0 bis 5 ist, die Alkylengruppen gleich oder verschieden sein können und insbesondere die vorstehend genannten sein können, und R¹ gleich oder verschieden ist und Wasserstoff oder ein gegebenenfalls substituierter Alkylrest, z.B. die in obiger allgemeinen Formel (I) genannten, ist R¹ kann auch ein zweiwertiger Rest, z.B. Alkylen, unter Bildung eines heterocyclischen Rings sein. Gegebenenfalls kann auch ein weiterer nicht-hydrolysierbarer Rest; z.B. Alkyl, vorhanden sein (a = 2). Konkrete Beispiele für derartige Silane sind 3-Aminopropyltrimethoxysilan (APTS), 3-Aminopropyltriethoxysilan, N-(2 Aminoethyl)-3-aminopropyltrimethoxysilan, N-[N'-(2'-Aminoethyl)-2-aminoethyl]-3-aminopropyltrimethoxysilan, N-[3-(Triethoxysilyl)propyl]-4,5-dihydroimidazol und [N-(2-Aminoethyl)-3-aminopropyl]-methyldiethoxysilan.

Beispiele für Anhydridsilane sind solche der obigen allgemeinen Formel (I), worin a einen Wert von 1 aufweist, X vorzugsweise C₁₋₄-Alkoxy, besonders bevorzugt Methoxy und Ethoxy, ist und R ein nicht-hydrolysierbarer Rest mit mindestens einer Anhydridgruppe ist, z. B. eine aliphatischer, cycloaliphatischer oder aromatischer Rest, insbesondere Alkylen, z. B. C₁-C₆-Alkylen, insbesondere C₁-C₄-Alkylen, wie Methylen, Ethylen, Propylen und Butylen, mit einer Anhydridgruppe. Bei der Anhydridgruppe, die ebenso wie die Epoxidgruppe zur Kondensation mit Aminogruppen befähigt ist, kann es sich z. B. um Reste handeln, die sich von Carbonsäureanhydriden, wie Bernsteinsäureanhydrid, Maleinsäureanhydrid oder Phthalsäureanhydrid, ableiten, die über einen der vorstehend genannten Reste, insbesondere C₁-C₄-Alkylen mit dem Siliciumatom verbunden sind. Beispiele sind [3-(Triethoxysilyl)propyl]bernsteinsäureanhydrid (Dihydro-3-(3-triethoxysilyl)propyl)-2,5-furandion, GF20) und [3-(Trimethoxysilyl)propyl]bernsteinsäureanhydrid.

Nach der Erfindung ist in der Biofilm-hemmenden Beschichtung zumindest ein Teil der organischen Gruppen des anorganischen Kondensats mit Fluor substituiert. Hierfür umfassen die in der Beschichtungszusammensetzung eingesetzten hydrolysierbaren Verbindungen ein oder mehrere hydrolysierbare Silane mit mindestens einer fluorhaltigen nicht-hydrolysierbaren Gruppe. Derartige Silane sind z.B. in WO 92/21729 oder in DE 4118184 detailliert beschrieben, worauf Bezug genommen wird. Die Verwendung eines derartigen fluorierten Silans führt zu hydrophoben und oleophoben Eigenschaften der Beschichtung.

Hierfür werden vorzugsweise hydrolysierbare Silanverbindungen mit mindestens einem nicht-hydrolysierbaren Rest eingesetzt, die die allgemeine Formel

Rf(R)_{b}SiX_{(3-b)} (II)

aufweisen, worin X und R wie in Formel (I) definiert sind, Rf eine nicht-hydrolysierbare Gruppe ist, die 1 bis 30 Fluoratome an aliphatische Kohlenstoffatome gebunden aufweist, die vorzugsweise durch mindestens zwei Atome, vorzugsweise eine Ethylengruppe, von Si getrennt sind, und b 0, 1 oder 2 ist. R ist insbesondere ein Rest ohne funktionelle Gruppe, bevorzugt eine Alkylgruppe wie Methyl oder Ethyl. Vorzugsweise enthalten die Gruppen Rf mindestens 2, 3, 5 oder 8 Fluoratome und nicht mehr als 25, 21 oder 18 Fluoratome, die an aliphatische (einschließlich cycloaliphatische) Kohlenstoffatome gebunden sind. Rf ist vorzugsweise eine fluorierte Alkylgruppe mit 3 bis 20 C-Atomen und Beispiele sind CF₃CH₂CH₂, C₂F₅CH₂CH₂, n-C₆F₁₃CH₂CH₂, i-C₃F₇OCH₂CH₂CH₂, n-C₈F₁₇CH₂CH₂ und n-C₁₀F₂₁-CH₂CH₂.

Fluoratome, die gegebenenfalls an aromatische Kohlenstoffatome gebunden sind (z.B. im Falle von C₆F₄), werden nicht berücksichtigt. Bei der fluorhaltigen Gruppe Rf kann es sich auch um einen Chelatliganden handeln. Ebenso ist es möglich, dass sich ein oder mehrere Fluoratome an einem Kohlenstoffatom befinden, von dem eine Doppel- oder Dreifachbindung ausgeht. Beispiele für einsetzbare Fluorsilane sind CF₃CH₂CH₂SiCl₂(CH₃), CF₃CH₂CH₂SiCl(CH₃)₂, CF₃CH₂CH₂Si(CH₃)(OCH₃)₂, C₂F₅-CH₂CH₂-SiZ₃, n-C₆F₁₃-CH₂CH₂SiZ₃, n-C₈F₁₇-CH₂CH₂-SiZ₃, n-C₁₀F₂₁-CH₂CH₂-SiZ₃, worin Z = OCH₃, OC₂H₅ oder Cl; i-C₃F₇O-CH₂CH₂CH₂-SiCl₂(CH₃), n-C₆F₁₃-CH₂CH₂-Si(OCH₂CH₃)₂, n-C₆F₁₃-CH₂CH₂-SiCl₂(CH₃) und n-C₆F₁₃-CH₂CH₂-SiCl(CH₃)₂.

Gewöhnlich sind nicht weniger als 0,1 Mol-%, insbesondere nicht weniger als 0,5 Mol-%, bevorzugt nicht weniger als 1 Mol-%, bevorzugter nicht weniger als 2 Mol-% und am meisten bevorzugt nicht weniger als 4 Mol-%, sowie gewöhnlich 100 Mol-% oder weniger, insbesondere nicht mehr als 50 Mol-%, bevorzugt nicht mehr als 30 Mol-% und bevorzugter nicht mehr als 15 Mol-% aller nicht-hydrolysierbaren Gruppen der in der Beschichtungszusammensetzung eingesetzten hydrolysierbaren Verbindungen Gruppen, die ein oder mehrere Fluoratome aufweisen. In einer bevorzugten Ausführungsform, insbesondere wenn in der Beschichtung Silberkolloide enthalten sind, beträgt der Anteil an fluorierten Silanen mehr als 2 Gew.-%, insbesondere mehr als 2,5 Gew.%, bezogen auf alle Monomere des anorganischen Kondensats.

Von den eingesetzten hydrolysierbaren Silanen mit mindestens einem nicht-hydrolysierbaren Substituenten für das Hydrolysat oder Vorkondensat weisen bevorzugt mindestens 40 Mol-%, bevorzugt mindestens 70 Mol-%, besonders bevorzugt mindestens 90 Mol-%, an mindestens einem nicht-hydrolysierbaren Substituenten mindestens eine funktionelle Gruppe auf. In einer bevorzugten Ausführungsform besitzen mit Ausnahme der gegebenenfalls eingesetzten fluorhaltigen Silane alle anderen eingesetzten hydrolysierbaren Silane mit mindestens einem nicht-hydrolysierbaren Substituenten an mindestens einem nicht-hydrolysierbaren Substituenten mindestens eine funktionelle Gruppe, über die eine Vernetzung möglich ist.

Für die Herstellung des Hydrolysats oder Vorkondensats können gegebenenfalls weitere hydrolysierbare Verbindungen eines Elements M ohne nicht-hydrolysierbare Gruppen als Matrixbildner eingesetzt werden. Dabei handelt es sich insbesondere um Verbindungen von glas- oder keramikbildenden Elementen, insbesondere Verbindungen mindestens eines Elements M aus den Hauptgruppen III bis V und/ oder den Nebengruppen II bis IV des Periodensystems der Elemente. Vorzugsweise handelt es sich um hydrolysierbare Verbindungen von Si, Al, B, Sn, Ti, Zr, V oder Zn, insbesondere solche von Si, Al, Ti oder Zr, oder Mischungen aus zwei oder mehreren dieser Elemente. Hierzu sei angemerkt, dass selbstverständlich auch andere hydrolysierbare Verbindungen eingesetzt werden können, insbesondere solche von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthaniden können verwendet werden. Vorzugsweise machen diese hydrolysierbare Verbindungen ohne nicht-hydrolysierbare Gruppe aber nicht mehr als 40 und insbesondere nicht mehr als 20 Mol% und insbesondere 0 Mol-% der insgesamt eingesetzten hydrolysierbaren monomeren Verbindungen aus. Bei Einsatz hochreaktiver hydrolysierbarer Verbindungen (z.B. Aluminiumverbindungen) empfiehlt sich die Verwendung von Komplexbildnern, die eine spontane Ausfällung der entsprechenden Hydrolysate nach Zugabe von Wasser verhindern. In der WO 92/21729 sind geeignete Komplexbildner genannt, die bei reaktiven hydrolysierbaren Verbindungen eingesetzt werden können.

Diese Verbindungen weisen insbesondere die allgemeine Formel MXₙ auf, worin M das vorstehend definierte Element ist, X wie in Formel (I) definiert ist, wobei zwei Gruppen X durch eine Oxogruppe ersetzt sein können, und n der Wertigkeit des Elements entspricht und meist 3 oder 4 ist. Bevorzugt werden Alkoxide von Si, Zr und Ti verwendet. Beschichtungszusammensetzungen auf Basis hydrolysierbarer Verbindungen mit nicht-hydrolysierbaren Gruppen und hydrolysierbaren Verbindungen ohne nicht-hydrolysierbare Gruppen sind z.B. in WO 95/31413 (DE 4417405) beschrieben, auf die hiermit Bezug genommen wird.

Als zusätzliche Verbindungen ohne nicht-hydrolysierbare Gruppen eignen sich insbesondere hydrolysierbare Silane, die die Formel

SiX₄ (III)

aufweisen, wobei X wie in Formel (I) definiert ist. Konkrete Beispiele sind Si(OCH₃)₄, Si(OC₂H₅)₄, Si(O-n- oder i-C₃H₇)₄, Si(OC₄H₉)₄, SiCl₄, HSiCl₃, Si(OOCC₃H)₄. Von diesen Silanen sind insbesondere Tetramethoxysilan und Tetraethoxysilan bevorzugt.

Ferner sind in der Biofilm-hemmenden Beschichtung Kupfer- oder bevorzugt Silberkolloide enthalten. Hierfür können entsprechende Kupfer- oder Silberkolloide in die Beschichtungszusammensetzung eingebracht werden, so dass nach Auftrag der Beschichtungszusammensetzung und Trocknung bzw. Härtung eine Beschichtung mit Kupfer- oder Silberkolloiden in der mit organischen Gruppen modifizierten anorganischen Kondensatmatrix gebildet wird.

Die Kupfer- oder Silberkolloide werden aber vorzugsweise in der Beschichtungszusammensetzung in situ aus Kupfer- oder Silberverbindungen gebildet. Dies kann durch Behandlung mit Wärme und/oder Strahlung erfolgen, wobei die Behandlung vor Auftrag oder vorzugsweise nach Auftrag der Beschichtungszusammensetzung, also zusammen mit der Trocknung bzw. Härtung der Beschichtung, oder vor und nach Auftrag erfolgt.

Die Beschichtungszusammensetzung umfaßt in diesem Fall mindestens eine Kupfer-oder Silberverbindung. Dabei kann es sich um in Wasser oder organischen Lösungsmitteln lösliche Kupfer- oder Silberverbindungen handeln, z.B. AgNO₃ oder CuSO₄, bevorzugt werden die Kupfer- oder Silberionen aber in Form von Komplexverbindungen und insbesondere Chelatkomplex-Verbindungen eingesetzt. Die Kupfer- oder Silber(I)-Ionen bzw. die Kupfer- oder Silber-Komptexverbindungen können unter reduzierenden Bedingungen zu Metall-Kolloiden reagieren. Beispiele für Komplexbildner, die mit Kupfer- oder Silber(I)-Ionen eine Kupfer- oder Silber-Komplexverbindung bilden, sind Halogenidionen, wie Iodid, Bromid und insbesondere Chlorid (bzw. die entsprechenden Halogenwasserstoffsäuren), Thioverbindungen, Thiocyanoverbindungen, Zucker, wie Pentosen und Hexosen, z.B. Glucose, β-Dicarbonylverbindungen, wie Diketone, z.B. Acetylacetonate, Ketoester, z.B. Acetessigsäurester und Allylacetoacetat, Etheralkohole, Carbonsäuren, Carboxylate, z.B. Acetat, Citrat oder Glycolat, Betaine, Diole, Polyole, auch polymere Polyole, wie Polyalkylenglycole, Kronenether, Phosphorverbindungen und Aminoverbindungen. Besonders bevorzugt werden Aminoverbindungen, wie Aminosilane, Mono-, Di-, Tri-, Tetraamine und höhere Polyamine, als Komplexbildner verwendet. Beispiele für organische Amine sind Triethylentetramin, Diethylentriamin und Ethylendiamin. Beispiele für Aminosilane sind 3-Aminopropyltri(m)ethoxysilan und insbesondere 2-Aminoethyl-3-aminopropyltrimethoxysilan (DIAMO), 2-Aminoethyl-3-aminopropyltriethoxysilan, Aminohexyl-3-aminopropyltrimethoxysilan und Aminohexyl-3-aminopropyltriethoxysilan. Vorzugsweise werden Kupferdiamin- oder Silberdiamin-Komplexverbindungen eingesetzt, wobei Komplexbildner mit mindestens zwei Aminogruppen, die Chelatkomplexe bilden können, sich besonders eignen. Von den Amino-Komplexbildnem sind die Aminosilane besonders bevorzugt. Diese werden in vorteilhafter Weise in die sich bildende Matrix eingebaut, was zur Stabilisierung der Kupfer- oder Silberkolloide beitragen kann.

Bei Verwendung eines Komplexbildners beträgt das stöchiometrische Verhältnis von Cu bzw. Ag zu vorhandenen komplexierenden Gruppierungen vorzugsweise 1:0,1 bis 1:500, insbesondere 1:1 bis 1:200. Die Komplexbildner können zumindest teilweise auch als Reduktionsmittel für die Kupfer- oder Silberionen fungieren. Weiter kommen gegebenenfalls die nachstehend beschriebenen Lösungsmittel, z.B. Alkohole oder Ketone, die sich bei der Hydrolyse und Kondensation bildenden Nebenprodukte, z.B. Alkohole, die eingesetzten hydrolysierbaren Verbindungen oder eine Kombination derselben als Reduktionsmittel in Betracht.

Die Beschichtungszusammensetzung kann in einer bevorzugten Ausführungsform ferner von Silber- oder Kupferkolloiden verschiedene nanoskalige anorganische Feststoffteilchen enthalten, die eine erhöhte mechanische Festigkeit (Kratzfestigkeit, Härte) der Beschichtung ergeben. Da bei längerem Gebrauch mögliche Kratzer aufgrund der Unebenheit die Biofilmbildung fördern können, unterstützen diese Nanopartikel ebenfalls das Biofilm-hemmende Verhalten.

Sie besitzen im allgemeinen eine Teilchengröße im Bereich von 1 bis 300 nm oder 1 bis 100 nm, vorzugsweise 2 bis 50 nm und besonders bevorzugt 5 bis 20 nm. Dieses Material kann in Form eines Pulvers eingesetzt werden, es wird jedoch vorzugsweise in Form eines, insbesondere sauer oder alkalisch, stabilisierten Sols verwendet. Die nanoskaligen anorganischen Feststoffteilchen können aus beliebigen anorganischen Materialien bestehen, insbesondere bestehen sie jedoch aus Metallen oder Metallverbindungen wie beispielsweise (gegebenenfalls hydratisierten) Oxiden wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃, Chalkogeniden, Nitriden, Phosphiden, Phosphaten, Silicaten, Zirconaten, Aluminaten oder Carbiden. Bei den nanoskaligen anorganischen Feststoffteilchen handelt es sich bevorzugt um ein Oxid, Oxidhydrat, Nitrid oder Carbid von Si, Al, B, Zn, Cd, Ti, Zr, Ce, Sn, In, La, Fe, Cu, Ta, Nb, V, Mo oder W, besonders bevorzugt von Si, Al, B, Ti und Zr. Besonders bevorzugt werden Oxide bzw. Oxidhydrate eingesetzt. Bevorzugte nanoskalige anorganische Feststoffteilchen sind SiO₂, Al₂O₃, ITO, ATO, AIOOH, ZrO₂ und TiO₂. Beispiele für nanoskalige SiO₂-Teilchen sind handelsübliche Kieselsäureprodukte, z.B. Kieselsole, wie die Levasile®, Kieselsole der Bayer AG, oder pyrogene Kieselsäuren, z.B. die Aerosil-Produkte von Degussa.

Bei den nanoskaligen anorganischen Feststoffteilchen kann es sich um mit organischen Oberflächengruppen modifizierte nanoskalige anorganische Feststoffteilchen handeln. Bei der Oberflächenmodifizierung von nanoskaligen Feststoffteilchen handelt es sich um ein bekanntes Verfahren, wie es z.B. in WO 93/21127 (DE 4212633) und WO 98/51747 (DE 19746885) beschrieben ist.

Die nanoskaligen anorganischen Feststoffteilchen können in einer Menge von 1 bis zu 50 Gew.%, bezogen auf die Festkomponenten der Beschichtungszusammensetzung, eingesetzt werden. Im allgemeinen liegt der Gehalt an nanoskaligen anorganischen Feststoffteilchen im Bereich von 1 bis 30 Gew.-%.

In der Beschichtungszusammensetzung können weitere Additive enthalten sein, die in der Technik üblicherweise je nach Zweck und gewünschten Eigenschaften zugegeben werden. Konkrete Beispiele sind organische Verbindungen, Vernetzungsmittel, Lösungsmittel, organische und anorganische Farbpigmente, Farbstoffe, UV-Absorber, Gleitmittel, Verlaufsmittel, Netzmittel, Haftvermittler und Starter. Der Starter kann zur thermisch oder photochemisch induzierten Vernetzung dienen.

Gegebenenfalls können organische Verbindungen bzw. Vernetzungsmittel zur Beschichtungszusammensetzung zugegeben werden. Dabei kann es sich um organische Monomere, Oligomere oder Polymere handeln, die insbesondere mindestens zwei funktionelle Gruppen enthalten, die mit den funktionellen Gruppen der eingesetzten hydrolysierbaren Silane unter Bildung einer organischen Vernetzung reagieren können. Es handelt sich z. B. um aliphatische, cycloaliphatische oder aromatische Verbindungen. Bevorzugt eingesetzt werden organische Verbindungen mit mindestens zwei Kohlenstoff-Kohlenstoff-Doppel- oder Dreifachbindungen, mindestens zwei Epoxidgruppen oder mindestens zwei Aminogruppen, wobei Kohlenstoff-Kohlenstoff-Doppelbindungen besonders bevorzugt sind. Beispiele für derartige organische Verbindungen sind Verbindungen mit mindestens zwei Acryloxy-, Methacryloxy-, Glycidyloxy-, Epoxid-, Hydroxyl- und/oder Aminogruppen. Die organische Verbindung wird vorzugsweise in einer Menge von nicht mehr als 30 Gew.%, bezogen auf den Feststoffgehalt der Beschichtungszusammensetzung, eingesetzt.

Beispiele für organische Verbindungen mit mindestens zwei Kohlenstoff-Kohlenstoff-Doppelbindungen sind 1,6-Hexandioldimethacrylat, 1,6-Hexandioldiacrylat, Bisphenol A-bisacrylat, Bisphenol A-bismethacrylat, Trimethyloipropantriacrylat, Trimethylolpropantrimethacrylat, Neopentylglycoldimethacrylat Neopentylglycoldiacrylat, Diethylenglycoldiacrylat, Diethylenglycoldimethacrylat, Triethylenglycoldiacrylat, Diethylenglycoldimethacrylat, Tetraethylenglycoldiacrylat, Tetraethylenglycoldimethacrylat, Polyethylenglycoldiacrylat, Polyethylenglycoldimethacrylat, 2,2,3,3-Tetrafluor-1,4-butandioldiacrylat und -dimethacrylat, 1,1,5,5-Tetrahydroperfluorpentyl-1,5-diacrylat und -dimethacrylat, Hexafluorbisphenol A-Diacrylat und -Dimethacrylat, Octafluorhexandiol-1,6-diacrylat und -dimethacrylat, 1,3-Bis(3-methacryloxypropyl)tetrakis(trimethylsiloxy)disiloxan, 1,3-Bis(3-acryloxypropyl)tetrakis(trimethylsiloxy)disiloxan, 1,3-Bis(3-methacryloxy-propyl)tetramethyldisiloxan und 1,3-Bis(3-acryloxypropyl)tetramethyldisiloxan.

Einsetzbare organische Epoxidverbindungen können z.B. von aliphatischen, cycloaliphatischen oder aromatischen Estern oder Ethern oder Mischungen davon, z. B. auf Basis von Ethylenglycol, 1,4-Butandiol, Propylenglycol, 1,6-Hexandiol, Cyclohexandimethanol, Pentaerythrit, Bisphenol A, Bisphenol F oder Glycerin, abgeleitet sein. Konkrete Beispiele für organische Verbindungen mit mindestens zwei Epoxidgruppen sind 3,4-Epoxycyclohexylmethyl-3,4-epoxycyclohexancarboxylat, Bis-(3,4-epoxycyclohexyl)adipat, 1,4-Butandiolglycidether, Cyclohexandimethanoldiglycidether, Glycerintriglycidether, Neopentylglycoldiglycidether, Pentaerythritpolyglycidether, 2-Ethylhexylglycidether, 1,6-Hexandioldiglycidether, Propylenglycoldiglycidether, Polypropylenglycoldiglycidether, Bisphenol-A-diglycidether, Bisphenol-F-diglycidether, Epoxidharze auf der Basis von Bisphenol-A, Epoxidharze auf Basis von Bisphenol-F und Epoxidharze auf Basis von Bisphenol-A/F. Konkrete Beispiele für organische Verbindungen mit mindestens zwei Aminogruppen sind 1,3-Diaminopentan, 1,5-Diamino-2-methylpentan, 1,4-Diaminocyclohexan, 1,6-Diaminohexan, Diethylendiamin, Triethylentetramin oder Isophorondiamin. Selbstverständlich können auch organische Verbindungen eingesetzt werden, die verschiedene funktionelle Gruppen tragen.

Als Starter oder Vemetzungsinitiator kommen alle dem Fachmann bekannten Starter/Startsysteme in Frage, einschließlich radikalischer Photostarter, radikalischer Thermostarter, kationischer Photostarter, kationischer Thermostarter und beliebiger Kombinationen derselben.

Konkrete Beispiele für einsetzbare radikalische Photostarter sind Irgacure^{®} 184 (1-Hydroxycyclohexylphenylketon), Irgacure^{®} 500 (1-Hydroxycyclohexylphenylketon, Benzophenon) und andere von der Firma Ciba-Geigy erhältliche Photoinitiatoren vom Irgacure^{®}-Typ; Darocur^{®} 1173, 1116, 1398, 1174 und 1020 (erhältlich von der Firma Merck); Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.

Beispiele für radikalische Thermostarter sind u.a. organische Peroxide in Form von Diacylperoxiden, Peroxydicarbonaten, Alkylperestem, Alkylperoxiden, Perketalen, Ketonperoxiden und Alkylhydroperoxiden sowie Azo-Verbindungen. Als konkrete Beispiele wären hier insbesondere Dibenzoylperoxid, tert-Butylperbenzoat und Azobisisobutyronitril zu nennen.

Ein Beispiel für einen kationischen Photostarter ist Cyracure^{®} UVI-6974, während ein bevorzugter kationischer Thermostarter 1-Methylimidazol ist.

Diese Starter werden in den üblichen, dem Fachmann bekannten Mengen eingesetzt, vorzugsweise 0,01 - 5 Gew.-%, insbesondere 0,1 - 3 Gew.-%, bezogen auf den Gesamt-Feststoffgehalt der Beschichtungszusammensetzung.

Beispiele für geeignete Lösungsmittel sind Alkohole, vorzugsweise niedere aliphatische Alkohole, wie Methanol, Ethanol, 1-Propanol, i-Propanol und 1-Butanol, Ketone, vorzugsweise niedere Dialkylketone wie Aceton und Methylisobutylketon, Ether, vorzugsweise niedere Dialkylether, wie Diethylether, Dibutylether und THF, Isopropoxyethanol, aromatische Kohlenwasserstoffe, wie Toluol, Ester, wie Essigsäureethylester, Butoxyethanol, Sulfoxide, Sulfone, Amide wie Dimethylformamid und deren Gemische. Prinzipiell muss kein Lösungsmittel eingesetzt werden, insbesondere dann, wenn die Hydrolyse der hydrolysierbaren Silane zur Bildung von Alkoholen, wie z.B. den vorstehend genannten, führen. Selbstverständlich kann aber auch dann ein Lösungsmittel eingesetzt werden.

Die Hydrolyse oder (Vor)kondensation der hydrolysierbaren Verbindungen erfolgt insbesondere nach dem Sol-Gel-Verfahren. Das Sol-Gel-Verfahren ist ein dem Fachmann geläufiges Verfahren. Die Hydrolyse oder Kondensation wird entweder in Abwesenheit eines Lösungsmittels oder vorzugsweise in einem wässrigen oder wässrig/organischen Reaktionsmedium, gegebenenfalls in Gegenwart eines sauren oder basischen Kondensationskatalysators wie HCl, HNO₃ oder NH₃ durchgeführt. Man erhält eine partielle Hydrolyse oder (Poly)kondensation der hydrolysierbaren Verbindungen (Hydrolysat oder Vorkondensat). Der Kondensationsgrad kann ebenso wie die Viskosität, z.B. durch das Lösungsmittel, in zweckmäßiger Weise eingestellt werden. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben. Das so erhaltene Sol wird als Beschichtungszusammensetzung eingesetzt, zu der gegebenenfalls weitere Komponenten, wie z.B. die Kupfer- oder Silberkomplexverbindungen oder die nanoskaligen Teilchen, in beliebiger Reihenfolge zugegeben werden. Solche Komponenten können auch vor oder während der Hydrolyse oder Vorkondensation mit den hydrolysierbaren Verbindungen gemischt werden. Es besteht auch die Möglichkeit, dass zuerst eine hydrolysierbare Verbindung hydrolysiert oder vorkondensiert wird und weitere einsetzbare hydrolysierbare Verbindung, wie die Fluorsilane, erst später zugegeben werden.

Die Beschichtungszusammensetzung kann auf jede übliche Weise auf das Substrat aufgetragen werden. Hierbei können alle gängigen nasschemischen Beschichtungsverfahren eingesetzt werden. Beispiele sind Schleuderbeschichten, (Elektro)tauchbeschichten, Rakeln, Sprühen, Spritzen, Spinnen, Ziehen, Schleudern, Gießen, Rollen, Streichen, Flutbeschichten, Foliengießen, Messergießen, Slotcoating, Meniskus-Coating, Curtain-Coating, Walzenauftrag oder übliche Druckverfahren, wie Siebdruck oder Flexoprint. Die Menge der aufgetragenen Beschichtungszusammensetzung wird so gewählt, dass die gewünschte Schichtdicke erzielt wird. Beispielsweise wird so gearbeitet, dass Trockenschichtdicken im Bereich von 1 bis 15 µm und bevorzugt 2 bis 5 µm erhalten werden. Ein Vorteil bei der vorliegenden Erfindung ist die variabel einstellbare Schichtdicke. Nach Aufbringung der Beschichtungszusammensetzung erfolgt gegebenenfalls eine Trocknung, z.B. bei Umgebungstemperatur (unter 40°C).

Die gegebenenfalls vorgetrocknete Beschichtung wird im allgemeinen einer Behandlung mit Wärme und/oder Strahlung unterworfen, um die Beschichtung zu härten. In einer bevorzugten Ausführungsform erfolgt die Härtung durch Bestrahlung. Zur Bestrahlung werden aktinische Strahlung, z. B. UV- oder Laserstrahlung, oder Elektronenstrahlen, verwendet. Besonders bevorzugt werden zur Bestrahlung UV-Strahlung oder Blaulicht, wie es im Dentalbereich verwendet wird, eingesetzt. Durch die Bestrahlung und/oder die Wärmebehandlung können eingesetzte Kupfer-oder Silberverbindungen in Kupfer- oder Silberkolloide überführt werden.

Es hat sich ergeben, dass die Kolloide in der Beschichtungszusammensetzung überraschenderweise auch bereits bei recht niedrigen Temperaturen aus den Kupfer- oder Silberverbindungen gebildet werden. Die Bildung der Kolloide beginnt insbesondere bei Temperaturen von unter 200°C, insbesondere unter 130°C, unter 100°C und sogar bereits unter 80°C, im allgemeinen ist eine Temperatur von mehr als 50°C notwendig, sofern keine Bestrahlung durchgeführt wird. Die Kolloidbildung beginnt z.B. bei einer Wärmebehandlung im Bereich von 50 bis 100°C, bevorzugt von 60 bis 80°C bzw. 70 bis 80°C. Eine solche Wärmebehandlung der Beschichtungszusammensetzung kann in einer bevorzugten Ausführungsform auch vor Auftrag der Beschichtungszusammensetzung erfolgen, um die Kolloidbildung einzuleiten oder zu vervollständigen. Bei der anschließenden Behandlung der aufgetragenen Beschichtung mit Wärme oder vorzugsweise Strahlung kann die Kolloidbildung fortgesetzt werden, wenn sie noch nicht vervollständigt war.

Es können größere Kolloide, z.B. mit 5 - 20 nm, insbesondere 10 - 20 nm Durchmesser, gebildet werden, die eine hohe Langzeitwirkung haben. Überraschenderweise hat sich gezeigt, dass durch Strahlung und/oder Wärmebehandlung Kupfer- oder Silberkolloide mit einem Durchmesser von z.B. 10 bis 30 nm besonders rasch gebildet werden. Die Menge an in der Beschichtungszusammensetzung eingesetzter Kupfer- oder Silberverbindung richtet sich nach der gewünschten Konzentration an Kolloiden in der Beschichtung, die z. B. mehrere Gew.-% betragen kann.

Die Härtung der Beschichtungszusammensetzung kann auch durch Wärmebehandlung bei Temperaturen von in der Regel unter 300°C, bevorzugt nicht mehr als 200°C und insbesondere nicht mehr als 130°C erfolgen. Bevorzugt sind Temperaturen, die sich auch für die oben erläuterte Kolloidbildung eignen, z.B. unter 100°C oder unter 80°C, z.B. 50 bis 100°C oder 60 bis 80°C. Selbstverständlich führt diese Wärmebehandlung ebenfalls zur Kolloidbildung, sofern diese nicht bereits gebildet worden sind.

Aufgrund der Bildung der Kolloide durch Bestrahlung und/oder relativ niedrige Temperaturen kann in vorteilhafter Weise ein schnelles Aushärten der Beschichtung vermieden werden, so dass den Kolloiden Zeit zur Bildung gegeben wird. Andererseits finden bei der Strahlungs- und/oder Wärmebehandlung zur Bildung der Kolloide Kondensationsprozesse und/oder Vernetzungsreaktionen in der Beschichtung statt, die zu einer erhöhten Viskosität führen, was zur Stabilisierung der Kolloide beiträgt. Es wird eine Beschichtung mit einer organisch modifizierten anorganischen Matrix erhalten, d.h. neben dem anorganischen Matrixgrundgerüst sind auch organische Seitengruppen vorhanden, die gegebenenfalls und bevorzugt untereinander oder über organische Verbindungen vernetzt sind. Die organischen Seitengruppen sind zumindest zum Teil fluoriert und in der Matrix sind Kupfer- oder Silberkolloide enthalten, wobei eine Kombination beider Merkmale zu einer besonders effektiven Biofilm-hemmenden Beschichtung führt, die eine stark biozide Wirkung auch über längere Zeiträume, besonders in Verbindung mit flüssigen Medien, und ausgezeichnete Antihafteigenschaften besitzt.

Die Biofilm-hemmende Beschichtung eignet sich allgemein für alle Gegenstände oder bestimmte Teile davon, die vor der Bildung eines Biofilms geschützt werden sollen. Beispiele sind Land-, Wasser- und Luftfahrzeuge, wie Schiffe (Antifouling), Kraftfahrzeuge, Schienenfahrzeuge (auch Gleise) und Flugzeuge, Klimaanlagen, Wärmetauscher, Bauwerke und deren Teile, wie Wohnhäuser, Krankenhäuser, Kirchen, Museen, Denkmäler und Brücken, insbesondere Innen- und Außenwände (insbesondere bei eingedrungener Feuchtigkeit), Fußböden, Fliesen und Räume davon, Rohrleitungssysteme, Geräte, Behälter, Satelliten, Maschinen, Möbel, Zäune, Implantate, Textilien und Holzbauten.

Die Beschichtungen eignen sich insbesondere auf dem Gebiet des Fahrzeugbaus, einschließlich des Schiffsbaus, für medizinische Einrichtungen und Apparaturen, wie Brutkästen, chirurgische Instrumente, chirurgisches Nähmaterial, Implantate, Gefäße, Tabletts, Verbundstoffe, Inhalationsmasken und Verpackungsmaterial, für Anlagen und Apparaturen für den Weltraum, wie Satelliten, Raumschiffe und deren Ausrüstung, in der Lebensmitteltechnologie, z.B. in Brauereien, Metzgereien, Bäckereien, bei der Milchverarbeitung, Schokoladenherstellung und in der Landwirtschaft, in der Küche, wie z.B. dort benutzte Möbel, Oberflächen und Geräte, für Außenanlagen, wie z.B. Gartenmöbel, Holzbauten oder Zäune, allgemein für die Imprägnierung von Textilien, Papier, Holz und Holzbauteilen, in der Pharmazie, Galenik oder Prozesstechnik, für die Reinraumtechnologie, Trinkwasserbereitung, Produktion nach GMP-Vorschriften (gute Herstellpraxis) und für Sanitäranlagen.

Das folgende Beispiel erläutert die Erfindung, ohne sie zu beschränken.

### Beispiel

### 1. Herstellung eines Basishydrolysats

In einem 1I-Dreihalskolben mit Thermometer, Rührer und Rückflusskühler wurden 248,4 g (1 mol) 3-Methacryloxypropyltrimethoxysilan (MPTS) vorgelegt, unter Rühren mit 99,36 g Essigsäure-stabilisiertem AIO(OH) (Boehmit, Sol P3, Fa. Condea) versetzt und 10 min suspendiert (Verhältnis MPTS-Oxid/AIO(OH) = 1,8). Anschließend wurde das Gemisch auf 90°C erhitzt und weitere 15 min gerührt. Dann wurden 35,95 g (2 mol) destilliertes Wasser langsam unter Rühren hinzugefügt und das Gemisch auf 100°C erhitzt. Nach etwa 5-10 min schäumte das Reaktionsgemisch stark (Methanol), woraufhin das Reaktionsgemisch, gerechnet ab dem Zeitpunkt der Wasserzugabe, 2,5 h unter Rühren bei 100°C Ölbadtemperatur unter Rückfluss erwärmt wurde. Dann wurde auf Raumtemperatur abgekühlt und durch ein 1 µm-Membranfilter (Celluloseacetat) mit Glasfaser-Vorfilter druckfiltriert und bis zur weiteren Verwendung bei -18°C aufbewahrt.

### 2. Herstellung einer AgNO₃-Lösung

In einem 100 ml Rundkolben wurden 27,0 g Ethanol vorgelegt und mit 1,28 g (7,5 mmol) AgNO₃ versetzt. Das Gemisch wurde 30 min bei Raumtemperatur gerührt und mit 14,0 g 2-Propanol sowie 3,0 g Aceton versetzt. Die AgNO₃-Lösung wurde bis zum Einsatz unter UV-Lichtausschluss bei Raumtemperatur gerührt.

### 3. Herstellung des Lacks

In einem 500 ml Dreihalskolben mit Rückflusskühler wurden unter Rühren 100 g des Basishydrolysats mit 122,3 g 1-Butanol homogenisiert. Dann wurde das Gemisch mit 23,5 g der hergestellten AgNO₃-Lösung versetzt und auf eine Ölbadtemperatur von 60°C erwärmt. Nach 10 min wurde zum Gemisch unter starkem Rühren tropfenweise 0,72 g N-(2-Aminoethyl)-3-aminopropyltrimethoxysilan gegeben, wobei das Gemisch sich langsam braun färbte. Die Reaktionslösung wurde 24 h bei 60°C gerührt. Nach Abkühlen auf Raumtemperatur wurden 12,9 g 1,6-Hexandioldimethacrylat, 1,3 g Verlaufsmittel Byk 306 und 8,3 g (5,5 mol-%/mol Doppelbindungen) Photoinitiator Irgacure 819 sowie 2,5 g Fluorsilan n-C₆F₁₃-CH₂CH₂SiZ₃, (Dynasil F 8261) zugegeben und unter Ausschluss von UV-Licht 24 h gerührt. Die einzelnen Komponenten sind in Tabelle 1 und die Gewichtsanteile der Komponenten in Tabelle 2 aufgeführt.

**Tabelle 1**

| | Lack |
|---|---|
| Feststoffgehalt [Gew.-%] | 35 |
| Basishydrolysat | 100 g |
| 1-Butanol | 122,3 g |
| Comonomer (HDDMA) | 12,9 g |
| Fluorsilan | 2,5 g |
| AgNO₃-Lösung | 23,5 g |
| Byk 306 | 1,3 g |
| Photoinitiator | 8,3 g |

**Tabelle 2: Gewichtsanteile der Komponenten im gebrauchsfertigen Lack**

| | Lack |
|---|---|
| MPTS-Oxid | 17,2 |
| AIO(OH) | 9,1 |
| Essigsäure | 0,5 |
| Wasser | 3,4 |
| Methanol | 9,2 |
| 1-Butanol | 45,0 |
| Ethanol | 5,2 |
| 2-Propanol | 2,7 |
| Aceton | 0,6 |
| Ag | 0,2 |
| DIAMO | 0,3 |
| Fluorsilan | 0,9 |
| Irgacure 819 | 3,1 |

### 4. Beschichtung von PMMA-Blend-Material und Polycarbonat-Platten

Der beschriebene Lack wurde mit einem Pinsel auf ein PMMA-Blend-Material bzw. PMMA-Blend-Platten aufgetragen. Die Verlaufseigenschaften wurden untersucht. Nach mechanischen Tests (Wasser- bzw. Schweißbeständigkeitstests Abriebbeständigkeit) erfolgten Bürsten- oder Crockmetertests.

Der beschriebene Lack wurde für eine homogene Beschichtungsoberfläche (z.B. für Kontaktwinkelmessungen) mit einem Schleuderverfahren auf planare Polycarbonat-Platten (5 x 5 cm; Dicke 3 mm) aufgetragen. Bei einer Drehzahl von 800 U/min und einer Schleuderdauer von 10 s ergaben sich Schichtdicken zwischen 4 - 6 µm (nach Polymerisation).

### 7. Härtung des Lacks

Die Substrate waren mit einer Grundierung aus einem gewöhnlichen Lack versehen. Die Härtung der Grundierung und des Lacks erfolgte mit Blaulicht. Die Grundierung wurde nach einer Ablüftzeit von 10 min (Ablüfttemperatur: 22°C) 6 min bei Normalatmosphäre gehärtet. Der Lack wurde nach einer Ablüftzeit von 10 min (Ablüfttemperatur: 22°C) 2 min unter Argon-Atmosphäre gehärtet.

## Patentansprüche

1. Substrat mit einer Biofilm-hemmenden Beschichtung aus einem mit organischen Gruppen modifizierten anorganischen Kondensat aus einer oder mehreren hydrolysierbaren anorganischen Verbindungen mit mindestens einem nicht-hydrolysierbaren Substituenten, wobei die hydrolysierbaren anorganischen Verbindungen ein oder mehrere Fluorsilane der allgemeinen Formel (II)
Rf(R)_{b}SiX_{(3-b)} (II)
umfassen, worin die Reste R gleich oder verschieden sind und nicht-hydrolysierbare Gruppen darstellen, die Reste X gleich oder verschieden sind und hydrolysierbare Gruppen oder Hydroxylgruppen bedeuten, Rf eine nicht-hydrolysierbare Gruppe ist, die 1 bis 30 Fluoratome an aliphatische Kohlenstoffatome gebunden aufweist, und b 0,1 oder 2 ist, und Kupfer-oder Silberkolloide in der Beschichtung enthalten sind.

2. Substrat nach Anspruch 1, **dadurch gekennzeichnet, dass** die Beschichtung zusätzlich nanoskalige anorganische Teilchen enthält.

3. Substrat nach Anspruch 1 oder 2, **dadurch gekennzeichnet, dass**
Rf eine fluorierte Alkylgruppe mit 3 bis 20 Kohlenstoffatomen ist.

4. Substrat nach einem der Ansprüche 1 bis 3, **dadurch gekennzeichnet, dass**
es zumindest an den zu beschichteten Teilen aus Metall, Gestein, Holz, Papier, Textilien, Leder, Keramik, Glas, Email, Gummi oder Kunststoff besteht.

5. Verfahren zur Herstellung eines Substrats mit einer Biofilm-hemmenden Beschichtung nach Anspruch 1, **dadurch gekennzeichnet, dass**
man eine Beschichtungszusammensetzung, die ein Hydrolysat oder Vorkondensat aus einer oder mehreren hydrolysierbaren anorganischen Verbindungen mit mindestens einem nicht-hydrolysierbaren Substituenten enthält, wobei die hydrolysierbaren anorganischen Verbindungen ein oder mehrere Fluorsilane der allgemeinen Formel (II)
Rf(R)_{b}SiX_{(3-b)} (II)
umfassen, worin die Reste R gleich oder verschieden sind und nicht-hydrolysierbare Gruppen darstellen, die Reste X gleich oder verschieden sind und hydrolysierbare Gruppen oder Hydroxylgruppen bedeuten, Rf eine nicht-hydrolysierbare Gruppe ist, die 1 bis 30 Fluoratome an aliphatische Kohlenstoffatome gebunden aufweist, und b 0,1 oder 2 ist, auf die zu beschichtende Oberfläche des Substrats aufbringt und mit Wärme und/oder Strahlung behandelt, wobei Kupfer-oder Silberkolloide in der Beschichtungszusammensetzung enthalten sind und/oder bei der Behandlung mit Wärme und/oder Strahlung aus in der Beschichtungszusammensetzung enthaltenen Kupfer- oder Silberverbindungen in situ gebildet werden.

6. Beschichtungszusammensetzung, enthaltend ein Hydrolysat oder Vorkondensat aus einer oder mehreren hydrolysierbaren anorganischen Verbindungen mit mindestens einem nicht-hydrolysierbaren Substituenten, **dadurch gekennzeichnet, dass**
es Kupfer- oder Silberkolloide und/oder eine durch Wärme und/oder Strahlung in Kupfer- oder Silberkolloide überführbare Kupfer- oder Silberverbindung enthält und
die hydrolysierbaren anorganischen Verbindungen ein oder mehrere Fluorsilane der allgemeinen Formel (II)
Rf(R)_{b}SiX_{(3-b)} (II)
umfassen, worin die Reste R gleich oder verschieden sind und nicht-hydrolysierbare Gruppen darstellen, die Reste X gleich oder verschieden sind und hydrolysierbare Gruppen oder Hydroxylgruppen bedeuten, Rf eine nicht-hydrolysierbare Gruppe ist, die 1 bis 30 Fluoratome an aliphatische Kohlenstoffatome gebunden aufweist, und b 0,1 oder 2 ist.

7. Beschichtungszusammensetzung nach Anspruch 6, **dadurch gekennzeichnet, dass**
die hydrolysierbaren anorganischen Verbindungen ein oder mehrere Silane der allgemeinen Formel (I)
RₐSiX₍₄₋ₐ₎ (I)
umfassen, worin die Reste R gleich oder verschieden sind und nicht-hydrolysierbare Gruppen darstellen, die Reste X gleich oder verschieden sind und hydrolysierbare Gruppen oder Hydroxylgruppen bedeuten und a den Wert 1,2 oder 3 hat.

8. Beschichtungszusammensetzung nach einem der Ansprüche 6 oder 7, **dadurch gekennzeichnet, dass**
die hydrolysierbaren anorganischen Verbindungen ein oder mehrere Silane umfassen, die mindestens einen nicht-hydrolysierbaren Rest aufweisen, der eine funktionelle Gruppe umfasst, über die eine Vernetzung möglich ist.

9. Beschichtungszusammensetzung nach Anspruch 8, **dadurch gekennzeichnet, dass**
von den eingesetzten Silanen mit mindestens einem nicht-hydrolysierbaren Substituenten mindestens 40 Mol-% mindestens einen nicht-hydrolysierbaren Rest aufweisen, der eine funktionelle Gruppe umfasst, über die eine Vernetzung möglich ist.

10. Beschichtungszusammensetzung nach einem der Ansprüche 8 oder 9, **dadurch gekennzeichnet, dass**
die funktionelle Gruppe eine Kohlenstoff-Kohlenstoff-Doppelbindung ist.

11. Beschichtungszusammensetzung nach einem der Ansprüche 6 bis 10, **dadurch gekennzeichnet, dass**
die Kupfer- oder Silberverbindungen Kupfer- oder Silberkomplexverbindungen sind.

## Claims

1. Substrate having a biofilm-inhibiting coating comprising an inorganic condensate modified with organic groups and consisting of one or more hydrolyzable inorganic compounds having at least one nonhydrolyzable substituent, where the hydrolyzable inorganic compounds comprise one or more fluorosilanes of the general formula (II)
Rf(R)_{b}SiX_{(3-b)} (II)
in which the radicals R are identical or different and constitute nonhydrolyzable groups, the radicals X are identical or different and denote hydrolyzable groups or hydroxyl groups, Rf is a nonhydrolyzable group containing 1 to 30 fluorine atoms attached to aliphatic carbon atoms, and b is 0, 1 or 2, and the coating comprises copper colloids or silver colloids.

2. Substrate according to Claim 1, **characterized in that** the coating further comprises nanoscale inorganic particles.

3. Substrate according to Claim 1 or 2, **characterized in that** Rf is a fluorinated alkyl group having 3 to 20 carbon atoms.

4. Substrate according to one of Claims 1 to 3, **characterized in that** it is composed at least on the parts to be coated of metal, rock, wood, paper, textiles, leather, ceramic, glass, enamel, rubber or plastic.

5. Process for producing a substrate having a biofilm-inhibiting coating according to Claim 1, **characterized in that** a coating composition which comprises a hydrolysate or precondensate of one or more hydrolyzable inorganic compounds having at least one nonhydrolyzable substituent, where the hydrolyzable inorganic compounds comprise one or more fluorosilanes of the general formula (II)
Rf(R)_{b}SiX_{(3-b)} (II)
in which the radicals R are identical or different and constitute nonhydrolyzable groups, the radicals X are identical or different and denote hydrolyzable groups or hydroxyl groups, Rf is a nonhydrolyzable group containing 1 to 30 fluorine atoms attached to aliphatic carbon atoms, and b is 0, 1 or 2, is applied to the substrate surface to be coated and is treated with heat and/or radiation, the coating composition comprising copper or silver colloids and/or copper or silver colloids being formed in situ during the treatment with heat and/or radiation from copper or silver compounds present in the coating composition.

6. Coating composition comprising a hydrolysate or precondensate of one or more hydrolyzable inorganic compounds having at least one nonhydrolyzable substituent, **characterized in that** it comprises copper colloids or silver colloids and/or a copper compound or silver compound which can be converted into copper or silver colloids by heat and/or radiation and the hydrolyzable inorganic compounds comprise one or more fluorosilanes of the general formula (II)
Rf(R)_{b}SiX_{(3-b)} (II)
in which the radicals R are identical or different and constitute nonhydrolyzable groups, the radicals X are identical or different and denote hydrolyzable groups or hydroxyl groups, Rf is a nonhydrolyzable group containing 1 to 30 fluorine atoms attached to aliphatic carbon atoms, and b is 0, 1 or 2.

7. Coating composition according to Claim 6, **characterized in that** the hydrolyzable inorganic compounds comprise one or more silanes of the general formula (I)
RₐSiX₍₄₋ₐ₎ (I)
in which the radicals R are identical or different and constitute nonhydrolyzable groups, the radicals X are identical or different and denote hydrolyzable groups or hydroxyl groups, and a has the value 1, 2 or 3.

8. Coating composition according to either of Claims 6 and 7, **characterized in that** the hydrolyzable inorganic compounds comprise one or more silanes which have at least one nonhydrolyzable radical that includes a functional group via which crosslinking is possible.

9. Coating composition according to Claim 8, **characterized in that** at least 40 mol% of the silanes used that have at least one nonhydrolyzable substituent have at least one nonhydrolyzable radical that includes a functional group via which crosslinking is possible.

10. Coating composition according to either of Claims 8 and 9, **characterized in that** the functional group is a carbon-carbon double bond.

11. Coating composition according to one of Claims 6 to 10, **characterized in that** the copper or silver compounds are copper or silver complex compounds.

## Revendications

1. Substrat doté d'un revêtement empêchant la formation d'un biofilm à partir d'un condensat inorganique modifié avec des groupes organiques, en un ou plusieurs composés inorganiques hydrolysables avec au moins un substituant non hydrolysable, dans lequel les composés inorganiques hydrolysables comprennent un ou plusieurs fluorosilane(s) de la formule générale (II)
Rf(R)_{b}SiX_{(3-b)} (II)
dans laquelle les radicaux R sont identiques ou différents et représentent des groupes non hydrolysables, les radicaux X sont identiques ou différents et représentent des groupes hydrolysables ou des groupes hydroxyle, Rf est un groupe non hydrolysable, qui présente 1 à 30 atomes de fluor liés sur des atomes de carbone aliphatiques, et b vaut 0, 1 ou 2, et des colloïdes de cuivre ou d'argent sont contenus dans le revêtement.

2. Substrat selon la revendication 1, **caractérisé en ce que** le revêtement contient en outre des particules inorganiques nanométriques.

3. Substrat selon la revendication 1 ou 2, **caractérisé en ce que** Rf est un groupe alkyle fluoré comprenant 3 à 20 atomes de carbone.

4. Substrat selon l'une quelconque des revendications 1 à 3, **caractérisé en ce qu'**il se compose, au moins sur les parties revêtues, de métal, de pierre, de bois, de papier, de textiles, de cuir, de céramique, de verre, d'émail, de caoutchouc ou de matière plastique.

5. Procédé pour la fabrication d'un substrat doté d'un revêtement empêchant la formation d'un biofilm selon la revendication 1, **caractérisé en ce que**
- on applique sur la surface à revêtir du substrat une composition de revêtement, qui contient un hydrolysat ou un précondensat composé d'un ou de plusieurs composés inorganiques hydrolysables avec au moins un substituant non hydrolysable, dans lequel les composés inorganiques hydrolysables comprennent un ou plusieurs fluorosilane(s) de la formule générale (II)
Rf (R)_{b}SiX_{(3-b)} (II)
dans laquelle les radicaux R sont identiques ou différents et représentent des groupes non hydrolysables, les radicaux X sont identiques ou différents et représentent des groupes hydrolysables ou des groupes hydroxyle, Rf est un groupe non hydrolysable, qui présente 1 à 30 atomes de fluor liés sur des atomes de carbone aliphatiques, et b vaut 0, 1 ou 2, et on la traite par la chaleur et/ou par un rayonnement, dans lequel des colloïdes de cuivre ou d'argent sont contenus dans la composition de revêtement et/ou sont formés in situ pendant le traitement par la chaleur et/ou par un rayonnement à partir de composés de cuivre ou d'argent contenus dans la composition de revêtement.

6. Composition de revêtement, contenant un hydrolysat ou un précondensat composé d'un ou de plusieurs composés inorganiques hydrolysables avec au moins un substituant non hydrolysable, **caractérisée en ce que**
- elle contient des colloïdes de cuivre ou d'argent et/ou un composé de cuivre ou d'argent transformable en colloïde de cuivre ou d'argent par la chaleur et/ou par un rayonnement et
- les composés inorganiques hydrolysables comprennent un ou plusieurs fluorosilane(s) de la formule générale (II)
Rf(R)_{b}SiX_{(3-b)} (II)
dans laquelle les radicaux R sont identiques ou différents et représentent des groupes non hydrolysables, les radicaux X sont identiques ou différents et représentent des groupes hydrolysables ou des groupes hydroxyle, Rf est un groupe non hydrolysable, qui présente 1 à 30 atomes de fluor liés sur des atomes de carbone aliphatiques, et b vaut 0, 1 ou 2.

7. Composition de revêtement selon la revendication 6, **caractérisée en ce que**
- les composés inorganiques hydrolysables comprennent un ou plusieurs silane(s) de la formule générale (I)
RₐSiX₍₄₋ₐ₎ (I)
dans laquelle les radicaux R sont identiques ou différents et représentent des groupes non hydrolysables, les radicaux X sont identiques ou différents et représentent des groupes hydrolysables ou des groupes hydroxyle, et a vaut 1, 2 ou 3.

8. Composition de revêtement selon l'une quelconque des revendications 6 ou 7, **caractérisée en ce que**
- les composés inorganiques hydrolysables comprennent un ou plusieurs silane(s), qui présentent au moins un radical non hydrolysable, qui comprend un groupe fonctionnel au moyen duquel une réticulation est possible.

9. Composition de revêtement selon la revendication 8, **caractérisée en ce que**, parmi les silanes utilisés avec au moins un substituant non hydrolysable, au moins 40 % molaires présentent au moins un radical non hydrolysable, qui comprend un groupe fonctionnel au moyen duquel une réticulation est possible.

10. Composition de revêtement selon l'une quelconque des revendications 8 ou 9, **caractérisée en ce que** le groupe fonctionnel est une double liaison carbone-carbone.

11. Composition de revêtement selon l'une quelconque des revendications 6 à 10, **caractérisée en ce que** les composés de cuivre ou d'argent sont des composés complexes de cuivre ou d'argent.
